# EUROPÄISCHE PATENTSCHRIFT

(11) **EP 0 364 770 B1**
(45) Veröffentlichungstag und Bekanntmachung des Hinweises auf die Patenterteilung: **08.03.1995**
(21) Anmeldenummer: 89117768.5
(22) Anmeldetag: 26.09.1989
(51) Int. Cl.: F02B 27/02

(54) **Frischgasleitungs-Resonanzsystem eines Verbrennungsmotors**
Air intake resonance system for an internal-combustion engine
Système d'admission à résonance pour un moteur à combustion interne

(30) Priorität: 18.10.1988 HU 533388
(43) Veröffentlichungstag der Anmeldung: 25.04.1990
(73) Patentinhaber: Autoipari Kutato és Fejlesztö Vállalat, Budapest XI (HU)
(72) Erfinder: Cser, Gyula, Dr.-Ing., HU-1026 Budapest (HU)
(74) Vertreter: Viering, Jentschura & Partner

(56) Entgegenhaltungen:
- EP-A- 0 225 620
- PATENT ABSTRACTS OF JAPAN vol. 5, no. 193 (M-101)(865) 09 Dezember 1981, & JP-A-56 115819 (NISSAN DIESEL KOGYO KK) 11 September 1981
- PATENT ABSTRACTS OF JAPAN vol. 11, no. 301 (M-628)(2748) 30 September 1987, & JP-A-62 091622 (NISSAN MOTOR CO LTD) 27 April 1987

## Beschreibung

Die Erfindung bezieht sich auf ein Resonanzsystem mit veränderbarer Geometrie bei einer Frischgasleitung eines Verbrennungsmotors, mit dessen Verwendung die die Ladung verbessernde Wirkung des Resonanzsystems auch bei mehreren gewählten Motordrehzahlen auf dem möglichst höchsten Niveau gehalten werden kann.

Die gemeinsame Eigenschaft der Resonanzsysteme ist, daß sie die günstigste Aufladungswirkung bei einer bestimmten Motordrehzahl - in erster Linie bei niedrigen Motordrehzahlen - gewährleisten und daß die Wirkung mit der Entfernung von dieser bestimmten Motordrehzahl abnimmt. Aber der eine Verbesserung annehmbaren Ausmaßes ergebende Drehzahlbereich erstreckt sich nicht über den vollen Betriebsdrehzahlbereich des Verbrennungsmotors. Daraus folgend strebt man an, daß diejenige Drehzahl - die sog. Resonanzdrehzahl - veränderbar ist, bei der das Resonanzsystem die günstigste Wirkung ausübt.

Mit Rücksicht darauf, daß die Eigenfrequenz der Schwingungen des im Resonanzsystem strömenden Frischgases neben der Schallgeschwindigkeit des Mediums mit den geometrischen Abmessungen des Resonanzsystems - VR = Resonanzvolumen, L = Länge des Resonanzrohrs, f = Querschnitt des Resonanzrohrs - bestimmt werden kann, kann die gewünschte Resonanzdrehzahl durch die Wahl dieser Abmessungen erreicht werden.

Die Bedeutung des Resonanzvolumens ist in der DE-A-3 232 366 beschrieben. Dementsprechend ergibt sich das Resonanzvolumen aus dem Rauminhalt des Resonanzbehälters, dem Rauminhalt der den Resonanzbehälter mit den Einlaßöffnungen der Zylinder verbindenden Saugkanäle und der Summe des während eines Schwingungszyklus der Frischluft mit dem Resonanzbehälter kommunizierenden durchschnittlichen Zylindervolumens.

So sind derartige Lösungen bekannt, wo der Rauminhalt des Resonanzbehälters und dadurch das Resonanzvolumen durch eine zweckmäßig gewählte Regelkonstruktion dem Wunsch gemäß kontinuierlich verändert wird.

In anderen Fällen, z.B. nach der JP-U2-5922249, wird die Länge des Resonanzrohrs zwecks Verschiebung der Resonanzfrequenz verändert. Ebenfalls bekannt ist eine Lösung, bei der zwei Resonanzrohre am Resonanzbehälter angeschlossen sind, von denen das eine Rohr mittels einer Schließkonstruktion geöffnet bzw. geschlossen werden kann (DE-A-3 544 122, JP-A-56 115 819). Mit dieser Lösung können der Querschnitt des Resonanzrohrs und die wirksame Rohrlänge gleichzeitig verändert werden.

Alle bekannten Lösungen haben aber denjenigen gemeinsamen Nachteil, daß die geometrischen Abmessungen des Resonanzsystems nur und ausschließlich auf diejenige Art und in demjenigen Maß verändert werden, die zur Veränderung der Eigenfrequenz des im System strömenden Frischgases erforderlich ist. Dies ergibt ein befriedigendes Ergebnis bei akustischen Schwingungssystemen, wo der Schwingungsprozeß neben bedeutungslosen Gasgeschwindigkeiten verläuft; sie können aber nicht mit gutem Wirkungsgrad bei den Resonanzsystemen von Verbrennungsmotoren verwendet werden, weil hier zwecks Verbesserung der Aufladung eine Gasströmung bedeutender Geschwindigkeit mit den Druckschwankungen gleichzeitig auftritt. So ist die richtige Wahl der Eigenfrequenz der Schwingungen nur eine erforderliche, aber nicht ausreichende Bedingung für den günstigen Betrieb.

Zielsetzung der Erfindung ist eine derartige Veränderung der Geometrie des Resonanzsystems, die nicht nur die gewünschte Veränderung der Eigenfrequenz ergibt, sondern darüberhinaus den optimalen Betrieb des Resonanzsystems auch bei Schwingungen veränderter Eigenfrequenz gewährleistet.

Dies wird durch die im Patentanspruch 1 beschriebenen Merkmale erreicht.

Die Erfindung basiert auf derjenigen Erkenntnis, daß bei der Verwendung von zwei in der Frischgasleitung der Verbrennungsmotoren parallel angeschlossenen und die Aufladung verbessernden Resonanzrohren die die Resonanzfrequenz des Resonanzsystems beeinflussenden drei geometrischen Parameter (Resonanzvolumen, Resonanzrohrlänge, Resonanzrohrquerschnitt) mittels eines einzigen derartigen Schließelementes verändert werden können, welches mittels Abkuppelung des einen Rohres gemeinsam auch das Resonanzvolumen verändert. (Das Resonanzvolumen ist nicht nur der Rauminhalt des Resonanzbehälters, sondern die Summe aller derjenigen angeschlossenen Räume, in denen die Druckveränderung im wesentlichen gleichzeitig verläuft, ohne Verzögerungszeit der Phasenverschiebung.

Die Erfindung bezieht sich also auf ein Resonanzsystem mit veränderbarer Geometrie in einer Frischgasleitung von Verbrennungskolbenmotoren, welches über einen mit an der Einlaßöffnung des Motorzylilnders anschließbarer Austrittsöffnung versehenen Resonanzbehälter verfügt, in welchen mehrere Resonanzrohre münden und sich der freie Durchströmungsquerschnitt des Frischgases aus dem einen Rohr, oder in gesteuerter paralleler Schaltung aus den mehreren Rohren ergibt, und das Schließelement mit der Abschließung des Querschnitts des Resonanzrohrs gemeinsam am Resonanzbehälter Raumelemente anschließt (vom Resonanzbehälter Raumelemente abkuppelt), wodurch die Resonanzfrequenz des Resonanzsystems verändert wird.

In der einfachsten konstruktiven Ausführungsform der Erfindung ist das Schließelement im demjenigen Rohrende des einen Resonanzrohres angeordnet, das dem an den Resonanzbehälter angeschlossenen Rohrende gegenüberliegt. Bei dieser Ausführungsform - insbesondere infolge des Abschließens des kürzeren Resonanzrohrs von Resonanzrohren unterschiedlicher Längen - setzt der Rohrcharakter des Resonanzrohrs aus, es nimmt einen Raumcharakter an, so daß der Rauminhalt des Resonanzrohrs bei der Bestimmung des Resonanzvolumens sich dem Rauminhalt des Resonanzbehälters hinzufügt.

Mit dem Schließen bzw. Öffnen verändern sich das Resonanzvolumen und der Resonanzrohr-Durchströmungsquerschnitt, durch den das Frischgas in den Motor hineinströmt, und bei Resonanzrohren unterschiedlicher Längen verändert sich auch die Funktionslänge des Resonanzrohrs. Mit dem Schließen bzw. Öffnen verändert sich selbstverständlich vor allem die Resonanzfrequenz.

So können wir die Eigenfrequenz des Systems auf zwei gesondert gewählte Motordrehzahlen einstellen, und zwar derart, daß bei beiden gewählten Eigenfrequenzen eine zur Verbesserung der Aufladung genügend hohe Gasgeschwindigkeit in dem jeweiligen Resonanzrohr auftritt, durch welches die Durchströmung erfolgt. Daran anpassend verändert sich die Größe des Resonanzvolumens, wodurch bei beiden Resonanzdrehzahlen das mittels des pneumatischen Schwingungssystems bestimmte günstige Rauminhaltsverhältnis zwischen dem Resonanzvolumen - als pneumatische "Feder" - und dem Rauminhalt des Resonanzrohres - als aus pneumatischem Medium bestehende "Masse" - sichergestellt ist.

Bei einer weiteren vorteilhaften Ausführungsform der Erfindung ist das Schließelement im Resonanzbehälter angeordnet. Das Schließelement trennt in seiner geschlossenen Stellung denjenigen Teil des Rauminhaltes des Resonanzbehälters ab, in dem das eine Resonanzrohr mündet.

Bei einer weiteren vorteilhaften Ausführungsform der Erfindung ist das Schließelement in einem Ausgleichbehälter angeordnet. Das Schließelement trennt in seiner geschlossenen Stellung denjenigen Teil des Rauminhaltes des Ausgleichhehälters ab, an dem das eine Resonanzrohr angeschlossen ist. (Der Ausgleichbehälter ist an demjenigen Rohrende der Resonanzrohre angeschlossen, welches dem am Resonanzbehälter angeschlossenen Rohrende entgegengesetzt ist. Der Ausgleichbehälter verfügt über eine Frischgaseintrittsöffnung.)

Mit der Erfindung kann erreicht werden, daß das Resonanzsystem nicht bei nur einer Motordrehzahl bzw. bei nur einer Frequenz eine maximale Aufladung ergibt, sondern bei einer anderen Motordrehzahl einen ähnlichen Gütegrad in der Erhöhung des Aufladungsfaktors zeigt. Dies kann dadurch erreicht werden, daß bei beiden Resonanzdrehzahlen diejenigen Bedingungen erfüllt sind, die einen wirksamen Betrieb ergeben, nämlich eine befriedigend hohe Gasgeschwindigkeit im Resonanzrohr auftritt, die eine bestimmte kinetische Energie leistet, aber sich zugleich auch das damit zusammenwirkende Resonanzvolumen verändert.

Das System kann also bei beiden Resonanzdrehzahlen zwecks Zylinderaufladung optimal gebildet werden, wogegen die bekannten Lösungen auf nur eine Resonanzfrequenz optimal abgestimmt sind, wobei diese Resonanzfrequenz innerhalb eines Bereiches verschoben oder transponiert wird und bei dieser Frequenz mangels Sicherstellung der Bedingungen auf den optimalen Betrieb verzichtet wird.

Bei der erfindungsgemäßen Lösung ist die Länge und/oder der Querschnitt der am Resonanzbehälter angeschlossenen Resonanzrohre nicht notwendigerweise gleich. Dadurch kann erreicht werden, daß der Querschnitt, die wirksame Länge und der Rauminhalt der Resonanzrohre, weiterhin das Resonanzvolumen sich durch Betätigen - Öffnen und Schließen - des Schließorgans verändern.

So können zu jeder gewählten Eigenfrequenz (Resonanzdrehzahl), die mit der Veränderung der geometrischen Abmessungen/Verhältnisse eingestellt werden kann, alle diejenigen anderen Bedingungen - z.B. gegebene Frischgasgeschwindigkeit bei der jeweiligen Resonanzdrehzahl, Raumverhältnis usw. - zustandegehracht werden, die die optimale Wirkung des Resonanzsystems gewährleisten.

Die Erfindung wird nachstehend mit Hilfe von beispielgebenden Ausführungsformen und den Dreizylinder- bzw. Vierzylinder-Viertaktmotore darstellenden Zeichnungen näher erläutert. Es zeigen
Fig. 1 - die erste Ausführungsform, bei der das Schließelement in dem einen Resonanzrohr angeordnet ist,
Fig. 2 - die zweite Ausführungsform, bei der das Schließelement im Resonanzbehälter angeordnet ist,
Figuren 3 und 4 - die dritte und die vierte Ausführungsform, bei denen das Schließelement in dem am Eintrittsquerschnitt der Resonanzrohre sich anschließenden Schwingungsbehälter angeordnet ist.

Der über Zylinder 1, 2, 3, 4 verfügende Vierzylinder-Viertaktverbrennungsmotor 5 ist in Reihenanordnung ausgebildet, in den Zylindern 1, 2, 3, 4 sind die Kolben 6, 7, B, 9 angeordnet. Die Zündfolge ist wie üblich, also die Zündung erfolgt nacheinander in den Zylindern 1, 3, 4, 2. Der Zündabstand beträgt 180°, die Öffnungszeiten der Einlaßventile 10 überlappen einander während der Saugtakte nicht bedeutend. In der Zeichnung sind die Auslaßventile nicht dargestellt. Die Einlaßventile 10 schließen die Einlaßöffnungen 11, an welchen Saugkanäle 12 angeschlossen sind, welche die Einlaßöffnungen 11 mit den Austrittsquerschnitten 13 des Resonanzbehälters verbinden. Die Saugkanäle 12 sind einzeln am Resonanzbehälter 14 angeschlossen. In den Resonanzbehälter 14 münden in Parallelschaltung zwei Resonanzrohre 15 mit ihren Enden 16 an den Eintrittsquerschnitten 17. Die Längen der beiden Resonanzrohre 15 sind gleich, die Eintrittsöffnungen 19 ihrer anderen Enden 18 haben eine mit der Fläche der Eintrittsquerschnitte 17 des Resonanzbehälters 14 gleiche Fläche.

Im Frischgasleitungssystem 26 sind die Rauminhalte 20 der Resonanzrohre 15, als die Träger der das Resonanzsystem bildenden "Frischgasmasse", an dasjenige Resonanzvolumen 24 angepaßt, welches aus dem Rauminhalt 21 des Resonanzbehälters 14, aus dem Rauminhalt 22 der Saugkanäle 12 und aus dem mit dem Resonanzbehälter 14 während der Schwingungsperiode kommunizierenden Durchschnittsvolumen der Rauminhalte 23 der Zylinder 1-4 gebildet ist und welches die "Feder" des Resonanzsystems bildet. Das pneumatische Resonanzsystem verfügt über eine durch die Länge der parallel angeschlossenen beiden Resonanzrohre 15, deren Gesamt-Durchströmungsquerschnitt (das Zweifache des Eintrittsquerschnitts 19), ihren Gesamt-Rauminhalt 20 als Masse, und das Resonanzvolumen 24 als Feder bestimmte Resonanzfrequenz, wobei das pneumatische Resonanzsystem zwecks Verbesserung der Zylinderaufladung auf eine mittlere Motordrehzahl abgestimmt ist.

Das erste Resonanzrohr 15 hat einen jeweils offenen Eintrittsquerschnitt 19, welcher sein wirksamer Durchströmungsquerschnitt ist, und am Ende 18 des zweiten Resonanzrohres 15, im Eintrittsquerschnitt 19 oder in dessen Nähe, ist ein Schließelement in der Form eines Klappenventils 25 angeordnet.

Das Klappenventil 25 ist mittels einer nicht dargestellten Betätigungseinrichtung an einer den Motor 5 und dieses Schließelement regelnden/steuernden Einheit angeschlossen. Das Klappenventil 25 hat im wesentlichen zwei Stellungen, und zwar die vollständig geöffnete und die vollständig geschlossene Stellung; eine mittlere Stellung besteht nur, insofern dies zur Gleichmäßigkeit der Veränderung der Leistung/Drehzahl des Motors 5 erforderlich ist.

In der geschlossenen und der geöffneten Stellung des Klappenventils 25 sind die geometrischen Abmessungen des Resonanzsystems des Frischgasleitungssystems 26 in zweifacher Weise voneinander abweichend, was durch das Klappenventil 25 gesteuert wird.

In der geschlossenen Stellung des Klappenventils 25 erfolgt keine Durchströmung durch das zweite Resonanzrohr 15, der Eintrittsquerschnitt 19 ist ausschließlich am ersten Resonanzrohr 15 frei. So ist die schwingende "Masse" des pneumatischen Resonanzsystems durch die das Volumen 20 eines einzigen Resonanzrohrs 15 ausfüllende Luftmenge gebildet, und daran angepaßt verändert sich die Größe des Resonanzvolumens 24, da es mit einem daran angeschlossenen Raumelement, mit dem Rauminhalt 20 des zweiten Resonanzrohrs 15 ergänzt wird, beziehungsweise auch die diesen ausfüllende Luftmenge als "Feder" funktioniert, also die Feder weicher wird. Ebenso, wie der Rauminhalt 22 der Saugkanäle 12 bildet auch der Rauminhalt 20 des geschlossenen Resonanzrohrs 15 einen Teil des Resonanzvolumens, und da diese einen Behältercharakter haben, erfolgt die Veränderung des darin bestehenden Luftdruckes ohne bedeutende Verzögerung und eigene Schwingungen in den einzelnen Elementen treten nicht auf. In der geschlossenen Stellung des Klappenventils 25 strömt die Frischluft bei niedriger Motordrehzahl durch einen einzigen Eintrittsquerschnitt 19 beziehungsweise ein einziges Resonanzrohr 15; so ist ihre Geschwindigkeit trotz der geringeren Drehzahl genügend hoch, daß ihre strömemde Masse die durch das Resonanzvolumen 24 eingeschlossene pneumatische weiche Feder in Schwingung bringt. Diese zweite Resonanzdrehzahl kann auf eine Drehzahl nahe unterhalb des Drehmomentmaximums des Motors 5 gewählt werden, wogegen die erste Resonanzdrehzahl auf eine Drehzahl nahe oberhalb des Drehmomentmaximums gewählt werden kann, damit der Motor 5 ein Drehmoment von annähernd konstanter Größe in einem breiteren Drehzahlbereich hat. Dadurch also, daß das Klappenventil 25 das eine der Resonanzrohre 15 schließt, schließt es ein Raumelement, den Rauminhalt 20 des Resonanzrohrs 15 an den Resonanzbehälter 14 an und das Resonanzsystem hat zwei Resonanzfrequenzen. Obwohl es in seiner Funktion nicht getrennt werden kann, kann der Motor 5 mit den Saugkanälen 12 konstruktiv gesondert gebaut werden und das Frischgasleitungssystem 26, welches aus dem Resonanzbehälter 14, den Resonanzrohren 15 und dem Klappenventil 25 besteht, kann eine gesonderte konstruktive Einheit bilden.

Die folgenden Ausführungsformen zeigen, daß an den Enden 18 der Resonanzrohre 15 verschiedene, die Frischluftverorgung sicherstellende Bauelemente angeschlossen werden können.

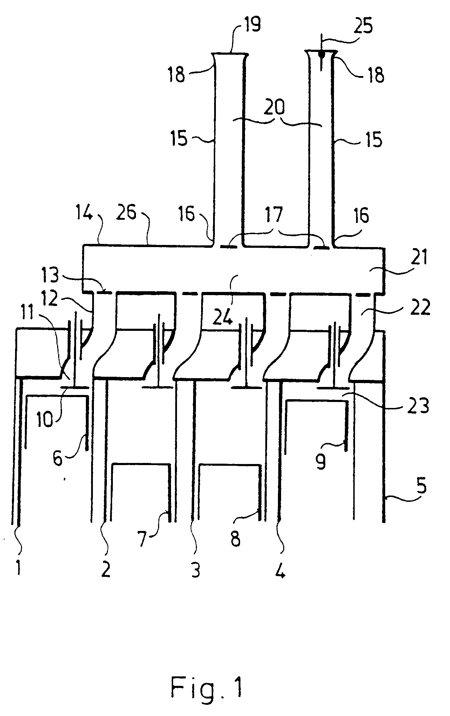

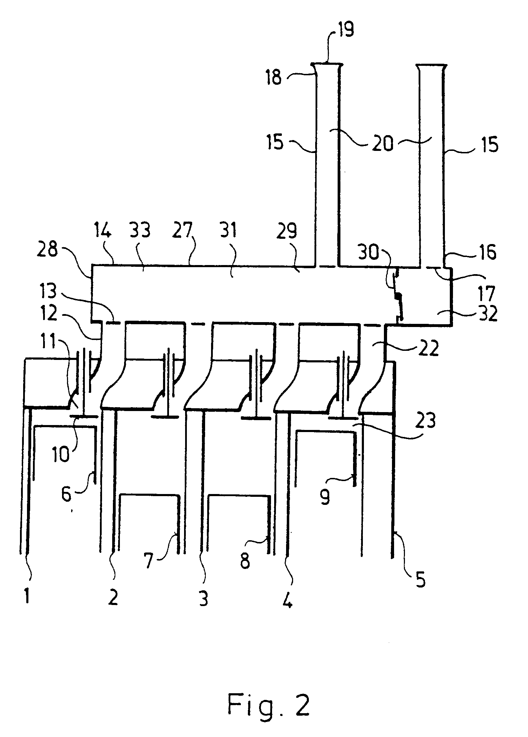

In Fig. 2 ist die zweite Ausführungsform dargestellt, bei der das Schließelement im Resonanzbehälter angeordnet ist. Der Motor 5 mit dem angeschlossenen Frischgasleitungssystem 27 ist mit dem in Fig. 1 dargestellten Motor gleich. Das Frischgasleitungssystem 27 hat zwei am Resonanzbehälter 28 parallel angeschlossene Resonanzrohre 15, wobei am Resonanzbehälter 28 die Saugkanäle 12 angeschlossen sind. Der gesamte Rauminhalt 29 des Resonanzbehälters 28 ist durch das darin angeordnete Schließelement, welches als Klappenventil 30 angedeutet ist, in zwei Teilräume geteilt, und zwar in den Hauptrauminhalt 31 und den ergänzenden Rauminhalt 32. In den Hauptrauminhalt 31 münden alle Saugkanäle 12 sowie das eine Resonanzrohr 15 und in den ergänzenden Rauminhalt 32 mündet das Ende 16 des zweiten Resonanzrohres 15 mit seinem Querschnitt 17. Die beiden Resonanzrohre 15 haben gleiche Längen und ihre Querschnittsfläche 17 ist ebenfalls gleich. Das Klappenventil 30 ist mittels einer nicht dargestellten Betätigungseinrichtung an einer den Motor 5 und dieses Schließelement regelnden/steuernden Einheit angeschlossen. Das Klappenventil 30 hat im wesentlichen zwei Stellungen, und zwar die vollständig geöffnete und die vollständig geschlossene Stellung; eine mittlere Stellung besteht nur, insofern dies zur Gleichmäßigkeit der Veränderung der Leistung/Drehzahl des Motors 5 erforderlich ist.

In der geschlossenen Stellung des Klappenventils 30 erfolgt keine Durchströmung durch das zweite Resonanzrohr 15, welches in den ergänzenden Rauminhalt 32 mündet: der Eintrittsquerschnitt 19, das heißt die Strömung ist ausschließlich durch das erste Resonanzrohr 15 frei. So wird die schwingende "Masse" des pneumatischen Resonanzsystems durch die den Rauminhalt 20 eines einzigen Resonanzrohres 15 ausfüllende Luftmenge gebildet, und daran anpassend verändert sich die Größe des Resonanzvolumens 33, da diese durch die Abkuppelung eines Rauminhaltelementes - eines Teilraumes, in welchen das eine Resonanzrohr 15 mündet -, und zwar des ergänzenden Rauminhaltes 32 vermindert wurde. So wird die pneumatische "Feder" härter.

Insbesondere günstig ist diese Ausführungsform in denjenigen Fällen, wo die Querschnitte 19 der beiden Resonanzrohre 15 unterschiedlich sind, das heißt in dem in den Hauptrauminhalt 20 mündenden ersten Resonanzrohr 15 aufgrund seines größeren Rauminhaltes 20 sich mehr Luft befindet, was eine größere "Masse" repräsentiert als im zweiten Resonanzrohr 15 geringeren Querschnitts 19.

In der offenen Stellung des Klappenventils 30 besteht an beiden Resonanzrohren 15 eine freie Durchströmung, so wird die schwingende "Masse" des pneumatischen Resonanzsystems durch die den Rauminhalt 20 beider Resonanzrohre 15 ausfüllende gesamte Luftmenge gebildet und die "Feder" des Resonanzsystems wird durch das Resonanzvolumen 33 gebildet, welches aus dem gesamten Rauminhalt 29 des Resonanzbehälters 28, den Rauminhalten der Saugkanäle und dem mit dem Resonanzbehälter 28 während einer Schwingungsperiode kommunizierenden Durchschnittsrauminhalt der Rauminhalte 23 der Zylinder 1-4 zusammengesetzt ist.

Es ist zweckmäßig, den Rauminhalt 29 des Resonanzbehälters 28 mittels Einbauen, Schließen/Öffnen des Klappenventils 30 in dem Fall zu vermindern, wenn die beiden Resonanzdrehzahlen nahe beieinander liegen sollen.

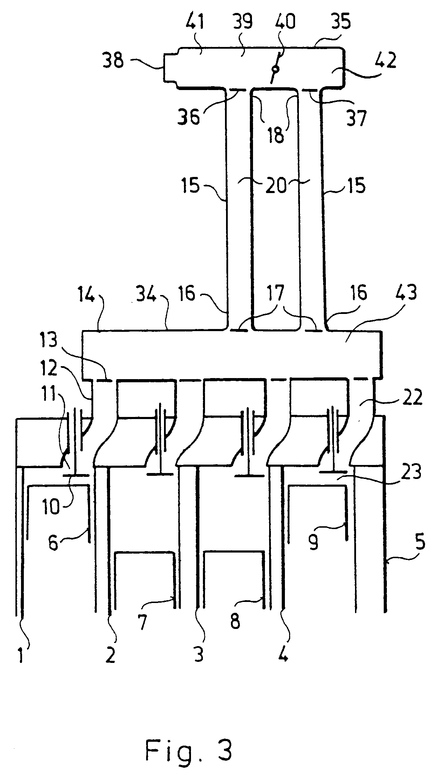

In Fig. 3 ist die dritte Ausführungsform dargestellt, bei der das Schließelement in einem Ausgleichbehälter angeordnet ist. Der Motor 5, an welchem das Frischgasleitungssystem 34 angeschlossen ist, ist mit der in Fig. 1 dargestellten ersten Ausführungsform identisch. Die Frischgasleitung 34 hat zwei parallel angeschlossene Resonanzrohre 15, einen Resonanzbehälter 28, an welchem die Saugkanäle 12 angeschlossen sind, weiterhin einen Ausgleichsbehälter 35, dessen Öffnungen 36 und 37 an den Eintrittsquerschnitten 19 der Enden 18 der Resonanzrohre 15 angeschlossen sind. Der Ausgleichsbehälter 35 hat eine Frischgaseintrittsöffnung 38, sein Rauminhalt 39 ist durch ein als Schließelement ausgebildetes Klappenventil 40 in zwei Teilräume, und zwar in den Raum 41 mit hindernisloser Durchströmung und in den angeschlossenen Raum 42 geteilt, welcher durch die nicht dargestellte Leistungs(Drehzahl-Regler)-Steuereinheit des Motors 5 mittels des Klappenventils 40 an den Raum 41 hindernisloser Durchströmung angeschlossen bzw. davon abgekuppelt wird. Das eine Resonanzrohr mündet in den Teilraum 41 und das andere Resonanzrohr mündet in den Teilraum 42.

Das Klappenventil 40 hat im wesentlichen zwei Stellungen, und zwar die vollständig geöffnete und die vollständig geschlossene Stellung, eine mittlere Stellung hesteht nur, insofern dies zur Gleichmäßigkeit der Veränderung der Leistung/Drehzahl des Motors 5 erforderlich ist.

In der offenen Stellung des Klappenventils 40 besteht an beiden Resonanzrohren 15 eine freie Durchströmung; so wird die schwingende "Masse" des pneumatischen Resonanzsystems durch die den Rauminhalt 20 beider Resonanzrohre 15 ausfüllende gesamte Luftmenge gebildet, und die "Feder" des Resonanzsystems wird durch den aus dem Rauminhalt 21 des Resonanzbehälters 14, dem Rauminhalt 22 der Saugkanäle 12 und dem mit dem Resonanzbehälter 14 während einer Schwingungsperiode kommunizierenden Durchschnittsrauminhalt der Rauminhalte 23 der Zylinder 1-4 entstehenden Resonanzvolumen 43 gebildet. Das pneumatische Resonanzsystem, welches auf eine die Zylinderausfüllung verbessernde mittlere Motordrehzahl abgestimmt ist, verfügt über eine durch die Länge der parallel angeschlossenen beiden Resonanzrohre 15, deren Gesamt-Durchströmungsquerschnitt, deren Gesamt-Rauminhalt 21 und das Resonanzvolumen 43 bestimmte Resonanzfrequenz.

In der geschlossenen Stellung des Klappenventils 42 besteht keine Durchströmung am zweiten Resonanzrohr 15, welches am angeschlossenen Raum 42 angeschlossen ist; der Eintrittsquerschnitt 19, das heißt die Durchströmung, ist ausschließlich am ersten Resonanzrohr 15 frei. So wird die schwingende "Masse" des pneumatischen Resonanzsystems durch die den Rauminhalt 20 eines einzigen Resonanzrohres 15 ausfüllende Luftmenge gebildet, und daran angepaßt verändert sich die Größe des Resonanzvolumens 32, weil dazu durch Anschließen zwei Rauminhaltelemente, der Rauminhalt 20 des zweiten Resonanzrohrs 15 und als Teilraum der Rauminhalt des angeschlossenen Raums 42 hinzugefügt wird. So wird die pneumatische "Feder" weicher. Infolgedessen gelangt die Resonanzfrequenz, und so diejenige Motordrehzahl, bei der das pneumatische Resonanzsystem die Zylinderausfüllung verbessert, in einen ganz niedrigen Drehzahlbereich.

In dem Ausführungsbeispiel hat der Ausgleichsbehälter 35 keine Funktionsrolle als Glied des pneumatischen Resonanzsystems. Der Ausgleichsbehälter 35 ist ein Glied der über Luftfilter verfügenden, nicht dargestellten vollständigen Frischgaseinführungseinheit des Motors 5, seine Aufgabe ist, einen Raum gleichmäßigen Druckes bei den Eintrittsquerschnitten 19 der Resonanzrohre 15 zustandezubringen. An der Frischgaseintrittsöffnung 38 des Ausgleichsbehälters 35 ist gegebenenfalls eine nicht dargestellte Aufladungsvorrichtung, z.B. die Turboaufladungs-Druckleitung mit Abgas-Gasturbine angeschlossen.

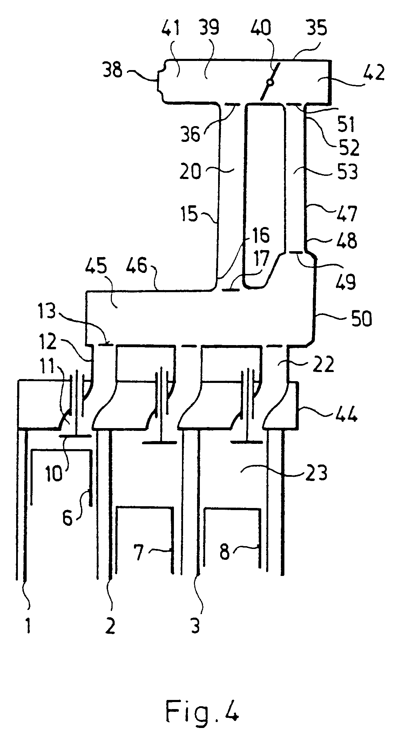

In Fig. 4 ist die vierte Ausführungsform am Beispiel eines Dreizylinder-Viertaktmotors dargestellt, bei dem das Schließelement im Ausgleichsbehälter angeordnet ist.

In den Zylindern 1, 2, 3 des Dreizylindermotors 44 sind die Kolhen 6, 7, 8 angeordnet. Die Zündfolge ist wie üblich: der Reihe nach folgen die Zylinder 1, 3, 2 aufeinander.

Der Zündsabstand beträgt 240°, die Öffnungszeiten der Einlaßventile 10 überlappen einander während der Zündsabstände nicht. In der Zeichnung sind die Auslaßventile nicht dargestellt.

Die Einlaßventile 10 schließen die Einlaßöffnungen 11, an welchen die Saugkanäle 12 angeschlossen sind und welche die Einlaßöffnungen 11 mit den Austrittsquerschnitten 13 des Resonanzbehälters 46 des Frischgasleitungssystems 47 verbinden. In den Resunanzbehälter 46 münden zwei parallel geschaltete Resonanzrohre, und zwar das Ende 16 des Resonanzrohrs 15 an den Eintrittsquerschnitt 17 des Resonanzbehälters 46, und das Ende 48 des kürzeren Resonanzrohrs 47 an den Eintrittsquerschnitt 49, welcher im Dom 50 des Resonanzbehälters 46 angeordnet ist.

Das andere Ende 18 des Resonanzrohrs 15 ist an der Austrittsöffnung 36 des Raumes 41 hindernisloser Durchströmung des Ausgleichsbehälters 35 angeschlossen und das Ende 52 des über den Rauminhalt 53 verfügenden Resonanzrohrs 47 ist an der Austrittsöffnung 51 des angeschlossenen Raums 42 des Ausgleichsbehälters 35 angeschlossen. Der Raum 41 hindernisloser Durchströmung und der angeschlossene Raum 42 des Ausgleichsbehälters 42 sind durch ein Klappenventil 40 voneinander getrennt.

Das Resonanzrohr 47 ist kürzer als das Resonanzrohr 15, seine Querschnittsfläche, die mit derjenigen der Öffnung 51 gleich ist, ist geringer als diejenige des Resonanzrohrs 15, deshalb ist auch sein Rauminhalt 53 geringer als der Rauminhalt 20 des Resonanzrohrs 15. Die Wirkungsweise der in Fig. 4 dargestellten Ausführungsform ist mit derjenigen der dritten Ausführungsform gleich, diese Lösung zeigt eine konstruktive Möglichkeit zur Wahl des Verhältnisses der Resonanzdrehzahlen.

Vielzylindermotore, bei denen Gruppen mit vier oder drei Zylindern gebildet werden können, können je Zylindergruppe mit gesonderten Frischgasleitungen versehen werden. Die Resonanzrohre der Resonanzbehälter von zwei oder mehr Zylindergruppen können an einen gemeinsamen Ausgleichsbehälter angeschlossen werden, wobei die Resonanzsysteme dann in Resonanzen funktionieren, wenn die Ausgleichsbehälter-Rauminhaltteile, die an den an den einzelnen Resonanzbehältern angeschlossenen Resonanzrohrgruppen angeschlossen sind, voneinander getrennt werden sollen, was durch das Ventil erreicht werden kann, wodurch im Ausgleichsbehälter die an den Resonanzrohren unterschiedlicher Resonanzhehälter angeschlossenen Lufträume durch Öffnen des Ventils in von den Resonanzdrehzahlbereichen abweichende Bereiche zusammengesetzt werden können.

## Patentansprüche

1. Frischgasleitungs-Resonanzsystem eines Kolbenverbrennungsmotors, mit einem Resonanzbehälter (14), der über Austrittsöffnungen (13) an Einlaßöffnungen (11) einer vorbestimmten Anzahl von Motorzylindern angeschlossen ist, denen der Resonanzbehälter zugeordnet ist, und in den mehrere Resonanzrohre (15) parallel einmünden, durch welche die Resonanzrohre durchströmendes Frischgas in den Resonanzbehälter (14) zuführbar ist, wobei das Resonanzsystem auf ein Aufladungsoptimum, bei dem die Größe des Resonanzvolumens und die Abmessung der Resonanzrohre (15) optimal aneinander angepaßt sind, an einer ersten Resonanzstelle bei einer vorbestimmten ersten Resonanzdrehzahl und einer vorbestimmten ersten Resonanzfrequenz ausgelegt ist und wobei ein Schließelement (25) vorgesehen ist, mit welchem die Frischgasströmung durch das eine der Resonanzrohre (15) unter Verlagerung der Resonanzstelle zu einer zweiten Resonanzfrequenz und einer zweiten Resonanzdrehzahl gesteuert unterbindbar ist, dadurch gekennzeichnet, daß mittels des Schließelements (25) gleichzeitig mit dem Unterbinden der Frischgasströmung ein Resonanzteilvolumen (20) an den Resonanzbehälter (14) derart anschließbar oder von diesem abtrennbar ist, daß dadurch an der zweiten Resonanzstelle ein zweites Aufladungsoptimum eingestellt wird, bei dem die Größe des Resonanzvolumens und die mittels des Schließelements (25) geänderte Abmessung der Resonanzrohre (15) optimal aneinander angepaßt sind.

2. Resonanzsystem nach Anspruch 1, dadurch gekennzeichnet, daß das Schließelement (25) in dem dem Resonanzbehälter (14) abgewandten Rohrende (18) des einen Resonanzrohres (15) angeordnet ist.

3. Resonanzsystem nach Anspruch 1, dadurch gekennzeichnet, daß das Schließelement (25) in dem Resonanzbehälter (28) angeordnet ist und in seiner geschlossenen Stellung einen solchen Teilraum (32) des Resonanzbehälters (28) abtrennt, in welchen das eine Resonanzrohr (15) mündet.

4. Resonanzsystem nach Anspruch 1, dadurch gekennzeichnet, daß die dem Resonanzbehälter (28) abgewandten Rohrenden (18) der Resonanzrohre (15) an einen gemeinsamen, eine Frischgaseintrittsöffnung (38) aufweisenden Behälter (35) angeschlossen sind, in welchem das Schließelement (40) in seiner geschlossenen Stellung einen solchen Teil (42) des gemeinsamen Behälters (35) abtrennt, an welchem das Rohrende (18) des einen Resonanzrohres (15) angeschlossen ist.

## Claims

1. Fresh gas resonance oscillation system of an internal combustion engine with a piston, said system comprising a resonator vessel (14) connected via outlet ports (13) with intake ports (11) of a predetermined number of motor cylinders, and cooperating with the resonator vessel into which a plurality of resonance pipes (15) lead and through which fresh gas flowing through the resonance pipes can be fed into the resonator vessel, said resonance oscillation system being adapted to having a charging optimum where the dimension of the resonance volume and the dimension of the resonance pipes (15) are adjusted with respect to each other in an optimal manner at a first resonance point at a predetermined first rotational resonance speed and a first resonance frequency, wherein a closing element (25) is provided by means of which the fresh gas flow through one of the resonance pipes (15) can be controlably prevented resulting in a shifting of the resonance point to a second resonance frequency and a second resonance rotational speed, characterized in that by means of the closing element (25), simultaneously with preventing the fresh gas flow, a partial resonance volume (20) is connectable to the resonator vessel (14) or separable therefrom in such a manner that this results in an adjustment of a second charging optimum where the dimension of the resonator volume and the dimension of the resonance pipes (15) changed by means of the closing element (25) are adjusted with respect to each other in an optimal manner.

2. Resonance oscillation system according to claim 1, characterized in that the closing element (25) is positioned in that pipe end (18) of the resonance pipe (15) which distant from the resonator vessel (14).

3. Resonance oscillation system according to claim 1, characterized in that the closing element (25) is positioned within the resonator vessel (28) and separates in its closed position such a partial space (32) within the resonator vessel (28) that the resonance pipe (15) leads into it.

4. Resonance oscillation system according to claim 1, characterized in that those pipe ends (18) of the resonator pipes (15) distant from the resonator vessel (28) are connected to a common vessel (35) having a fresh gas intake port (38), said closing element (40) separating in its closed position such a part (42) of the common vessel (35) that the pipe end (18) of the one resonator pipe (15) is connected thereto.

## Revendications

1. Système d'admission de gaz à résonance d'un moteur à combustion interne à pistons, comprenant un résonateur (14) qui est raccordé par des ouvertures de sortie (13) à des ouvertures d'admission (11) d'un nombre prédéterminé de cylindres de moteur auxquels le résonateur est associé, et dans lequel débouchent parallèlement plusieurs tubes de résonance (15) par lesquels du gaz d'alimentation traversant les tubes de résonance peut être délivré dans le résonateur (14), le système à résonance étant conçu pour un optimum d'alimentation sous pression pour lequel la grandeur du volume de résonance et la dimension des tubes de résonance (15) sont adaptées entre elles de façon optimale à un premier point de résonance correspondant à une première vitesse de rotation de résonance prédéterminée et à une première fréquence de résonance prédéterminée et un élément de fermeture (25) étant prévu à l'aide duquel l'écoulement de gaz d'alimentation dans l'un des tubes de résonance (15) peut être arrêté par commande avec déplacement du point de résonance à une deuxième fréquence de résonance et à une deuxième vitesse de rotation de résonance, caractérisé en ce que l'élément de fermeture (25) peut, simultanément à l'arrêt de l'écoulement de gaz d'alimentation, raccorder au ou séparer du résonateur (14) un volume partiel de résonance (20), de façon à régler, au deuxième point de résonance, un deuxième optimum d'alimentation sous pression, pour lequel la grandeur du volume de résonance et la dimension des tubes de résonance (15) modifiée au moyen de l'élément de fermeture (25) sont adaptées entre elles de façon optimale.

2. Système de résonance selon la revendication 1, caractérisé en ce que l'élément de fermeture (25) est disposé dans l'extrémité (18) dudit tube de résonance (15) opposée au résonateur (14).

3. Système de résonance selon la revendication 1, caractérisé en ce que l'élément de fermeture (25) est disposé dans le résonateur (28) et sépare dans sa position fermée un volume partiel (32) du résonateur dans lequel débouche ledit tube de résonance (15).

4. Système de résonance selon la revendication 1, caractérisé en ce que les extrémités (18) opposées au résonateur (28) des tubes de résonance (15) sont raccordées à un récipient commun (35) présentant une ouverture d'entrée (38) de gaz d'alimentation, dans lequel l'élément de fermeture (40) sépare, dans sa position fermée, une partie du récipient commun (35) à laquelle est raccordée l'extrémité dudit tube de résonance (15).
